# EUROPÄISCHE PATENTSCHRIFT

(11) **EP 0 494 157 B1**
(45) Veröffentlichungstag und Bekanntmachung des Hinweises auf die Patenterteilung: **25.01.1995**
(21) Anmeldenummer: 90912384.6
(22) Anmeldetag: 22.08.1990
(51) Int. Cl.: D21C 5/02, C08F 8/32

(54) **VERFAHREN ZUR FLOTATION VON FÜLLSTOFFEN AUS ALTPAPIEREN IN GEGENWART VON POLYMEREN UND/ODER COPOLYMEREN**
FLOTATION PROCESS FOR REMOVING FILLERS FROM WASTE PAPER IN THE PRESENCE OF POLYMERS AND COPOLYMERS
PROCEDE DE FLOTTATION POUR ELIMINER DES CHARGES CONTENUES DANS DES VIEUX PAPIERS EN PRESENCE DE POLYMERES ET DE COPOLYMERES

(30) Priorität: 31.08.1989 DE 3928842
(43) Veröffentlichungstag der Anmeldung: 15.07.1992
(73) Patentinhaber: Henkel Kommanditgesellschaft auf Aktien, 40191 Düsseldorf (DE)
(72) Erfinder: ENGELSKIRCHEN, Konrad, Dr., D-4005 Meerbusch 3 (DE); FISCHER, Herbert, Dr, D-4000 Düsseldorf 13 (DE); HORNFECK, Klaus, D-4020 Mettmann (DE); OBERKOBUSCH, Doris, Dr., D-4000 Düsseldorf 13 (DE); SCHIEFFERSTEIN, Ludwig, Dr., D-4030 Ratingen 1 (DE)
(86) Internationale Anmeldenummer: EP9001396
(87) Internationale Veröffentlichungsnummer: WO9103597

(56) Entgegenhaltungen:
- EP-A- 256 312
- EP-A- 373 375
- FR-A- 2 332 301

## Beschreibung

Die Erfindung betrifft ein Verfahren zur Entfernung von Füllstoffen aus Altpapieren sowie die Verwendung von mindestens teilweise wasserlöslichen Polymeren und/oder Copolymeren mit Zahlenmitteln der Molekulargewichte zwischen 1 000 und 500 000 zur Entfernung von Füllstoffen aus Altpapieren.

Fast alle Papiere werden mit Füllstoffen versetzt, um ihre Bedruckbarkeit, Dichtigkeit und Opazität zu verbessern sowie eine gleichmäßigere Durchsicht und einen größeren Weißgrad zu erhalten. Die zum Einsatz gelangenden Füllstoffe sind mineralischer Natur oder chemisch gefällte Produkte, beispielsweise Aluminiumsilikate, wie Kaoline oder kieselsaure Tonerde, Calciumcarbonate, wie Kreide oder Kalk, Talkum, Calciumsulfat und/oder Bariumsulfat (Ullmanns Encyklopädie der technischen Chemie 17, 577 ff. (1979)). Der Füllstoffanteil in der Papiermasse hängt vom Verwendungszweck des Papiers ab und liegt in den meisten Fällen zwischen 7 und 25 Gew.-%. Um ein Papier mit standardisierten Qualitätsmerkmalen herstellen zu können, ist es unerläßlich, daß die zur Papierherstellung notwendigen Roh- und Hilfsstoffe eine gleichbleibende Qualität aufweisen.

Bedruckte Altpapiere werden in großen Mengen bei der Erzeugung von Druck- und Tissuepapieren eingesetzt. Zur Erzielung einer hohen Papierweiße müssen die Druckfarben aus bedruckten Altpapieren entfernt werden. Dies geschieht mittels Deinking-Verfahren, die im wesentlichen in 2 Teilschritten ablaufen:
1. Aufschlagen der Altpapiere, d.h. Zerfasern in Wasser bei gleichzeitigem Einwirken der für die Ablösung der Druckfarbenteilchen benötigten Chemikalien und
2. Ausscheidung der abgelösten Druckfarbenteilchen aus den Papierstoffsuspensionen.

Der zweite Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Papierstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Abtrennen der Druckfarben bewirken, werden in vielen Fällen Seifen und/oder Fettalkoholpolyglykolether eingesetzt (Ullmanns Encyclopädie der technischen Chemie, 4. Auflage, Band 17, Seiten 571 - 572 (1979)).

Die bekannten Verfahren zur Ausscheidung der abgelösten Druckfarbenteilchen aus den Papierstoffsuspensionen weisen jedoch gravierende Nachteile auf: Durch Flotation wird der hohe Füllstoffanteil in Altpapieren nur sehr unvollständig entfernt, so daß der Anteil an deinktem Altpapier bei der Papierherstellung, insbesondere bei der Herstellung von Zeitungsdruckpapieren, auf etwa 50 Gew.-% begrenzt wird. Durch Wäsche der Papierfasern werden die in Altpapieren enthaltenen Füllstoffe entfernt, jedoch mit dem Nachteil eines sehr hohen Faserverlustes und einer sehr starken Wasserbelastung.

Aus "Wochenblatt für Papierfabrikation" 17, 646 - 649 (1985) ist bekannt, daß der Füllstoffaustrag durch Flotation gesteigert werden kann, wenn Altpapiere nicht mit wäßrigen Flotten, die Seifen oder nichtionische Tenside enthalten, behandelt werden, sondern mit wäßrigen Flotten, die als Tenside insbesondere Alkylbenzolsulfonate, quatäre Ammoniumverbindungen oder ampholytische Tenside enthalten. Diese Verbesserung des Füllstoffaustrages reicht jedoch in vielen Fällen nicht aus, die hohen Anforderungen, die an die Qualität wiedereinsetzbarer Altpapiere gestellt werden, zu erfüllen.

Die Aufgabe der Erfindung bestand daher in der Entwicklung eines Verfahrens, mit dem eine deutliche Steigerung des Füllstoffaustrages aus Altpapieren erzielt werden kann.

Die Erfindung geht von der überraschenden Feststellung aus, daß der Füllstoffaustrag aus wäßrigen Papierstoffsuspensionen in Gegenwart von mindestens teilweise wasserlöslichen Polymeren und/oder Copolymeren mit Zahlenmitteln der Molekulargewichte zwischen 1 000 und 500 000 deutlich erhöht wird.

Gegenstand der Erfindung ist dementsprechend ein Verfahren zur Entfernung von Füllstoffen aus Altpapieren, welches dadurch gekennzeichnet ist, daß man nach der Druckfarbenflotation den wäßrigen Papierstoffsuspensionen mindestens teilweise wasserlösliche Polymere und/oder Copolymere mit Zahlenmitteln der Molekulargewichte zwischen 1 000 und 500 000, hergestellt durch Polymerisation oder Copolymerisation von aminogruppenhaltigen Monomeren oder hergestellt durch Umsetzung von carboxyl-, ester- und/oder anhydridgruppenhaltigen Polymeren mit Aminoalkoholen und/oder Diaminen, in einer Gesamtmenge von 0,1 bis 8 g/kg lufttrockenem Papierstoff zusetzt und anschließend in an sich bekannter Weise flotiert.

Weiterer Erfindungsgegenstand ist die Verwendung von mindestens teilweise wasserlöslichen Polymeren und/oder Copolymeren mit Zahlenmitteln der Molekulargewichte zwischen 1 000 und 500 000, hergestellt durch Polymerisation oder Copolymerisation von aminogruppenhaltigen Monomeren oder hergestellt durch Umsetzung von carboxyl-, ester- und/oder anhydridgruppenhaltigen Polymeren mit Aminoalkoholen und/oder Diaminen, zur Entfernung von Füllstoffen aus Altpapieren durch Flotation.

Unter lufttrockenem Papierstoff versteht man Papierstoff, in dem sich ein Gleichgewichtszustand an innerer Feuchte eingestellt hat. Dieser ist von der Temperatur und der relativen Feuchte der Luft abhängig.

Unter dem Begriff "Füllstoffe" werden die in der Papierindustrie üblicherweise verwendeten Substanzen, beispielsweise Aluminiumsilikate, wie Kaoline oder kieselsaure Tonerde und/oder Calciumcarbonate, wie Kreide oder Kalk verstanden.

"Mindestens teilweise wasserlöslich" bedeutet, daß die Polymeren und/oder Copolymeren beim Anwendungs-pH-Wert zu mehr als 0,01 Gew.-% in Wasser klar oder trübe löslich sind.

Nach der Druckfarbenflotation werden die wäßrigen Papierstoffsuspensionen erfindungsgemäß mit vorzugsweise 1 bis 4 g Polymeren und/oder Copolymeren pro kg lufttrockenem Papierstoff bei 20 bis 60 °C versetzt. Die wäßrigen Papierstoffsuspensionen werden mit solchen Polymeren und/oder Copolymeren versetzt, deren Zahlenmittel der Molekulargewichte vorzugsweise zwischen 1 000 und 200 000, besonders bevorzugt zwischen 1 000 und 100 000 liegen. Der pH-Wert der Suspensionen liegt zwischen 7 und 11, vorzugsweise zwischen 8 und 10. Der Papierstoffgehalt liegt in den Suspensionen beispielsweise zwischen 0,5 und 2 Gew.-%. Anschließend wird in an sich bekannter Weise bei Temperaturen zwischen 20 und 95 °C, vorzugsweise zwischen 45 und 60 °C in beispielsweise einer Denver-Flotationszelle flotiert.

Die erfindungsgemäß einzusetzenden Polymeren und/oder Copolymeren können durch Polymerisation von
A. aminogruppenhaltigen Monomeren der allgemeinen Formel I 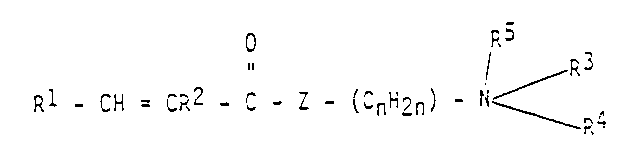 in der R¹ und R² jeweils Wasserstoff oder Methyl, R³ und R⁴ jeweils Wasserstoff oder einen C₁₋₄-Alkylrest oder einen Piperazin-, Piperidin- oder Morpholinrest bedeuten, R⁵ einen gerad- oder verzweigtkettigen Alkylrest mit 1 bis 22 C-Atomen darstellt, mit der Maßgabe, daß das Gegenion zur Ammoniumfunktion ein Halogen-, Sulfat-, Phosphat-, Borat- oder organisches Säureanion ist, oder R⁵ ein Elektronenpaar darstellt, Z O oder NH bedeutet und n eine Zahl zwischen 2 und 5 ist,
oder durch Copolymerisation von A. mit
B1. monomeren, ungesättigten Säuren der allgemeinen Formel II 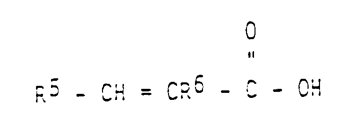 in der R⁵ und R⁶ jeweils ein Wasserstoffatom oder eine Methylgruppe bedeuten, und/oder
B2. monomeren, ungesättigten Carbonsäureestern der allgemeinen Formel III 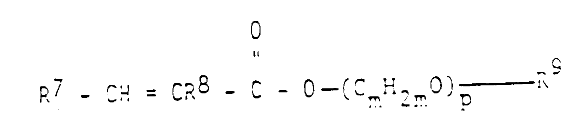 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen bedeuten und m Zahlen zwischen 2 und 4 darstellt und p eine Zahl zwischen 0 und 18 ist, mit der Maßgabe, daß im Falle p = 0 der Gehalt ungesättigter Carbonsäureester im Copolymer 30 Gew.-% nicht übersteigt und/oder

B3. Acrylamiden und/oder Methacrylamiden, die an den Amidstickstoffatomen durch gerad- und/oder verzweigtkettige Alkylreste mit 1 bis 22 C-Atomen substituiert sein können, und/oder
B4. N-Vinylpyrrolidon,
hergestellt werden.

Als aminogruppenhaltige Monomere der allgemeinen Formel I eignen sich insbesondere solche, in denen die Reste R¹ Wasserstoff, R² Wasserstoff oder Methyl, R³ und R⁴ jeweils Methyl oder Ethyl, R⁵ ein Elektronenpaar oder R⁵ eine C₁₋₄-Alkylgruppe mit der Maßgabe, daß das Gegenion zur Ammoniumfunktion ein Halogenanion ist, und Z O oder NH bedeuten und n eine Zahl zwischen 2 und 5 ist, beispielsweise Dimethylaminoethylmethacrylat, Dimethylaminoethylacrylat, Dimethylaminopropylmethacrylamid, Dimethylaminoneopentyl- acrylat, Diethylaminoethylacrylat, Diethylaminoethylmethacrylat und/oder Methacrylamidopropyltrimethylammoniumchlorid. Als monomere, ungesättigte Säuren der allgemeinen Formel II werden vorzugsweise Acrylsäure und/oder Methacrylsäure eingesetzt. Monomere, ungesättigte Carbonsäureester der allgemeinen Formel III, in denen der Rest R⁹ vorzugsweise eine gerad- oder verzweigtkettige Alkylgruppe mit 1 bis 8 C-Atomen bedeutet, sind beispielsweise Ethylacrylat, Methylmethacrylat, Butylacrylat, Butylmethacrylat, Octylacrylat und/oder Butyl · 3 Mol Ethylenoxid-acrylat. Zur Copolymerisation mit aminogruppenhaltigen Monomeren der allgemeinen Formel I eignen sich ferner Acrylamid, Methacrylamid, N-Ethylacrylamid und/oder tert.-Butylacrylamid.

Die Polymerisation oder Copolymerisation der aminogruppenhaltigen Monomeren der allgemeinen Formel I wird nach an sich bekannten Polymerisationsverfahren in wäßrigen Medien, die gewünschtenfalls mit Wasser mischbare Lösungsmittel, wie Alkohole - z. B. Isopropanol - enthalten, durchgeführt (Ullmanns Encyclopädie der technischen Chemie, 4. Auflage, Band 19, Seite 3-4, Verlag Chemie Weinheim, 1980). Als Starter wird eine radikalbildende Substanz, beispielsweise Kalium- oder Ammoniumperoxidsulfat, tert.-Butylhydroperoxid, Azobis(cyanpentansäure), Azobis(isobutyronitril) oder 2,2'-Azobis(2-amidinopropandihydrochlorid), in geringen Mengen zugegeben. Die Polymerisation oder Copolymerisation der aminogruppenhaltigen Monomeren der allgemeinen Formel I kann beispielsweise in der Weise erfolgen, daß aminogruppenhaltige Monomere der allgemeinen Formel I und gegebenenfalls Monomere der Gruppen B1, B2, B3 und/oder B4 gleichzeitig in Wasser, das den Starter enthält, getropft werden. Die Polymerisationstemperatur kann in einem weiten Bereich schwanken. In Abhängigkeit von dem eingesetzten Starter können Temperaturen zwischen 60 und 100 °C optimal sein. Es werden wäßrige Polymeren- und/oder Copolymerenlösungen mit Polymergehalten beispielsweise zwischen 10 und 60 Gewichtsprozent erhalten.

Ein hoher Füllstoffaustrag durch Flotation wird auch erreicht, wenn die mindestens teilweise wasserlöslichen Polymeren und/oder Copolymeren durch Umsetzung von Polymeren, die Carboxylgruppen und/oder Estergruppen der allgemeinen Formel -COOR, in der R eine C₁₋₈-Alkylgruppe oder eine aromatische Gruppe bedeutet, und/oder -CO-O-CO-Gruppen enthalten,
mit, bezogen auf die in den Polymeren enthaltenen Carboxyl-, Ester- und/oder latenten Carboxylgruppen,
D1. 0 bis 1 Äquivalent Aminoalkoholen der allgemeinen Formel IV 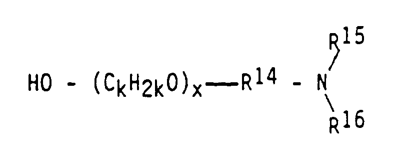 in der R¹⁴ eine C₁₋₈-Alkylgruppe oder eine aromatische Gruppe, R¹⁵ und R¹⁶ gleich oder verschieden sind und C₁₋₄-Alkylgruppen oder aromatische Gruppen oder R¹⁵ und R¹⁶ zusammen CH₂CH₂-O-CH₂CH₂, k 2, 3 und/oder 4 und x eine Zahl zwischen 0 und 10 bedeuten,
D2. 0 bis 1 Äquivalent Diaminen der allgemeinen Formel V 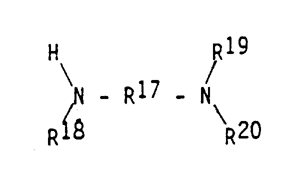 in der R¹⁷ eine C₁₋₈-Alkylgruppe oder eine aromatische Gruppe, R¹⁸ H oder eine C₁₋₄-Alkylgruppe und R¹⁹ und R²⁰ gleich oder verschieden sind unC C₁₋₄-Alkylgruppen oder R¹⁹ und R²⁰ zusammen -CH=CH-N=CH- bedeuten,
D3. 0 bis 0,5 Äquivalenten Alkoholen der allgemeinen Formel VI

   HO - (CᵢH₂ᵢO)_{y}―R²¹

   in der R²¹ eine C₆₋₂₂-Alkylgruppe oder eine aromatische Gruppe, i 2, 3 und/oder 4 und y eine Zahl zwischen 0 und 30 bedeuten und
D4. 0 bis 0,5 Äquivalenten Aminen der allgemeinen Formel VII 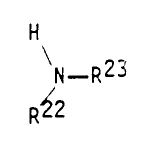 in der R²² H oder eine C₁₋₄-Alkylgruppe und R²³ eine C₆₋₂₂-Alkylgruppe oder eine aromatische Gruppe bedeuten,
mit der Maßgabe, daß die Summe der Äquivalente der Komponenten D1 und D2 ungleich 0 ist,
hergestellt werden.

Anhydridgruppen, die in den Polymeren enthalten sein können, enthalten pro Anhydridgruppe zwei latente Carboxylgruppen.

Vorzugsweise werden carboxyl-, ester- und/oder anhydridgruppenhaltige Polymere mit, bezogen auf die in den Polymeren enthaltenen Carboxyl-, Ester- und/oder latenten Carboxylgruppen,
D1. 0 bis 1 Äquivalent Aminoalkohlen,
D2. 0 bis 1 Äquivalent Diaminen,
D3. 0 bis 0,2 Äquivalenten Alkoholen und
D4. 0 bis 0,2 Äquivalenten Aminen,
mit der Maßgabe, daß die Summe der Äquivalente der Komponenten D1 und D2 zwischen 0,7 und 1 liegt, eingesetzt.

Carboxyl-, ester- und/oder anhydridgruppenhaltige Polymere enthalten vorzugsweise Struktureinheiten der allgemeinen Formeln 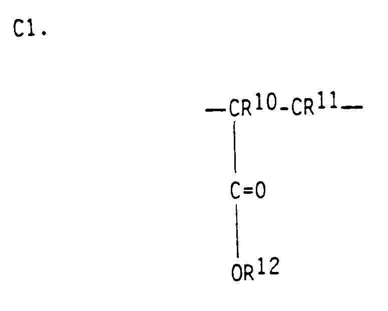
und/oder 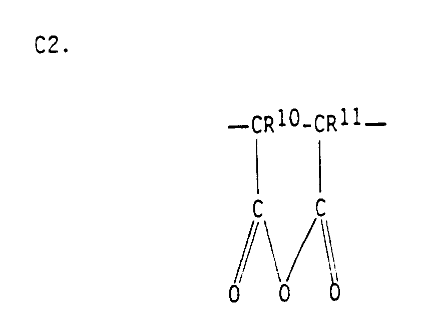
und/oder 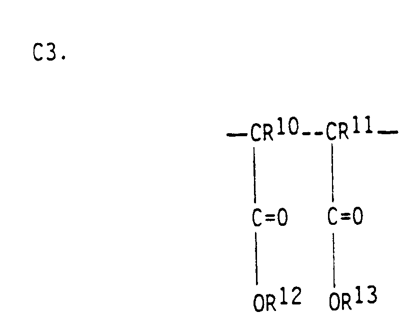
in denen R¹⁰ und R¹¹ gleich oder verschieden sind und jeweils H oder eine Methylgruppe und R¹² und R¹³ gleich oder verschieden sind und jeweils H, C₁₋₈-Alkylgruppen oder aromatische Gruppen bedeuten.

Polymere, die nur Struktureinheiten der allgemeinen Formel C1 enthalten, werden besonders bevorzugt.

Die zur Herstellung von erfindungsgemäß einzusetzenden Polymeren benötigten carboxyl-, ester- und/oder anhydridgruppenhaltigen Polymere lassen sich nach bekannten Polymerisationsverfahren in organischen Lösungsmitteln, wie Hexan, Octan, Toluol, Xylol und/oder Ketonen, herstellen. Als Monomere eignen sich beispielsweise Acrylsäure, Methacrylsäure, Crotonsäure, C₁₋₈-Alkylester der vorgenannten Säuren, Arylester der vorgenannten Säuren, Maleinsäureanhydrid, Maleinsäure, Fumarsäure, Mono-C₁₋₈-Alkylester der vorgenannten Säuren, Di-C₁₋₈-Alkylester der vorgenannten Säuren sowie die entsprechenden Arylester. Die Alkylgruppe der Alkoholreste in den Estern kann linear, verzweigtkettig oder cyclisch sein. Es kann ein Monomer oder ein Monomerengemisch eingesetzt werden. Acrylsäure, Methacrylsäure, Acrylsäureester und/oder Methacrylsäureester werden als Monomere bevorzugt. Als weitere Monomere können Styrol, Alkylstyrole, 4-Vinylpyridin, N-Vinyl-Pyrrolidon, Acrylnitril, Acrylamid, Methacrylamid, Vinylchlorid und/oder Vinylidenchlorid, eingesetzt werden. Die Polymerisationen werden in Gegenwart radikalbildender Substanzen, beispielsweise Dibenzoylperoxid und/oder Azobisisobutyronitril bei Temperaturen zwischen 60 und 150 °C unter Normaldruck durchgeführt.

Die Umsetzungen der carboxyl-, ester- und/oder anhydridgruppenhaltigen Polymeren mit Aminoalkoholen und/oder Diaminen und gegebenenfalls Alkoholen und/oder Aminen, werden mit oder ohne organische Lösungsmittel, vorzugsweise in Gegenwart von Katalysatoren, wie Schwefelsäure, p-Toluolsulfonsäure, Dibutylzinndilaurat, Zinn und/oder Alkalialkoholaten bei Temperaturen zwischen 100 und 230 °C durchgeführt. Das während der Veresterung und/oder Amidierung gebildete Wasser und/oder die gebildeten Alkohole werden destillativ entfernt. Als organische Lösungsmittel eignen sich beispielsweise aliphatische und/oder aromatische Kohlenwasserstoffe mit Siedepunkten oberhalb von 100 °C.

Als Aminoalkohole der allgemeinen Formel IV eignen sich beispielsweise 2-Dimethylaminoethanol, 2-Diethylaminoethanol, 3-Dimethylamino-2,2-dimethyl-1-propanol, 4-(Dimethylamino)-1-butanol, 6-(Dimethylamino)-1-hexanol, 2-[2-(Dimethylamino)ethoxy]ethanol, 2-Dibutylaminoethanol, 3-Dimethylamino-1-propanol, 3-Diethylamino-1-propanol, 4-Dimethylaminophenol, 3-Diethylaminophenol, N-Hydroxyethyl-N-methylanilin, N-Hydroxyethyl-N-ethylanilin, N-n-Butyl-N-hydroxyethylanilin und/oder 4-(2-Hydroxyethyl)morpholin. Beispiele für Diamine der allgemeinen Formel V sind N,N-Dimethylaminopropylamin, N,N-Diethylaminopropylamin, N,N-Diethylaminoethylamin, 1-Diethylamino-4-aminopentan, N,N-Dimethyl-p-phenylendiamin, N,N-Diethyl-p-phenylendiamin und/oder 1-(3-Aminopropyl)imidazol.

Die Umsetzungen von carboxyl-, ester- und/oder anhydridgruppenhaltigen Polymeren mit Aminoalkohlen und/oder Diaminen können in Gegenwart von Alkoholen der allgemeinen Formel VI und/oder Aminen der allgemeinen Formel VII durchgeführt werden. Die Alkylgruppen, die in den Alkoholen und/oder Aminen enthalten sein können, können linear, verzweigtkettig und/oder cyclisch sein. Beispiele für Alkohole der allgemeinen Formel VI sind Cyclohexanol, 2-Ethylhexanol, Octanol, Dodecanol, Tetradecanol, Hexadecanol, Octadecanol, Docosanol, Talgalkohol mit 12 Mol Ethylenoxid und/oder Benzylalkohol. Beispiele für Amine der allgemeinen Formel VII sind Hexylamin, 2-Ethylhexylamin, Octylamin, Decylamin, Dodecylamin, Tetradecylamin, Hexadecylamin, Octadecylamin, Docosylamin, Kokosamin und/oder Talgamin.

Besonders bevorzugt werden carboxyl-, ester- und/oder anhydridgruppenhaltige Polymere, die Struktureinheiten der allgemeinen Formel C1, in der R¹⁰ H, R¹¹ H oder eine Methylgruppe und R¹² H oder eine C₁₋₄-Alkylgruppe bedeuten, enthalten, mit Aminoalkoholen und/oder Diaminen umgesetzt.

Erfindungsgemäß kann die Entfernung von Füllstoffen aus Altpapieren mit mindestens teilweise wasserlöslichen Polymeren und/oder Copolymeren, hergestellt durch Polymerisation oder Copolymerisation und/oder mindestens teilweise wasserlöslichen Polymeren, hergestellt durch Umsetzung von carboxyl-, ester-und/oder anhydridgruppenhaltigen Polymeren mit Aminoalkoholen und/oder Diaminen, durchgeführt werden. In vielen Fällen kann der Füllstoffaustrag aus den Altpapieren erheblich gesteigert werden, wenn mindestens teilweise wasserlösliche Polymere und/oder Copolymere in Kombination mit mindestens teilweise wasserlöslichen, amino- und/oder ammoniumgruppenhaltigen Polymeren mit Zahlenmitteln der Molekulargewichte zwischen 2 000 und 500 000 eingesetzt werden. In diesen Mischungen liegt das Gewichtsverhältnis von mindestens teilweise wasserlöslichen Polymeren und/oder Copolymeren zu mindestens teilweise wasserlöslichen, amino- und/oder ammoniumgruppenhaltigen Polymeren zwischen 10 : 1 bis 1 : 10, vorzugsweise zwischen 5 : 1 und 1 : 5. Die Mischungen werden Papierstoffsuspensionen in Mengen von 0,1 bis 8 g, vorzugsweise in Mengen von 1 bis 4 g - jeweils pro kg lufttrockenem Papierstoff - zugesetzt. Beispiele für mindestens teilweise wasserlösliche amino- und/oder ammoniumgruppenhaltige Polymere sind Polyethylenimine, ethyleniminhaltige Copolymere, Polymere und/oder Copolymere auf Basis von 2-Vinylpyridin, 4-Vinylpyridin und/oder 1-Vinylimidazol, primäre, sekundäre, tertiäre und/oder quaternierte aminogruppenhaltige Polysaccharide und/oder Heteropolysaccharide, beispielsweise primäre, sekundäre, tertiäre und/oder quaternierte aminogruppenhaltige Cellulosen, Hydroxyethylcellulosen, Stärken, Chitosan und/oder Guar, Proteine sowie Mischungen der vorgenannten Polymeren.

Die nach dem erfindungsgemäßen Verfahren erhaltenen Faserstoffe zeichnen sich im Vergleich zu Faserstoffen, die in Gegenwart üblicher Tenside flotiert wurden, durch deutlich geringere Füllstoffgehalte aus. Mit dem erfindungsgemäßen Verfahren ist nunmehr die Möglichkeit gegeben, den Anteil an deinktem Altpapier bei der Papierherstellung auf über 50 Gew.-% zu steigern.

### Beispiele

### Herstellung von Polymer I

In einen Reaktor mit Rührer, 2 Zulaufgefäßen, Heizung, Kühlung, Rückflußkühlung sowie Temperaturmessung wurden 170 mg 2,2'-Azobis(2-amidinopropandihydrochlorid) und 36,8 g Wasser gegeben. In das eine Zulaufgefäß (Zulaufgefäß 1) wurden 42 g Dimethylaminoethylmethacrylat gegeben, in das andere eine Lösung aus 330 mg 2,2'-Azobis(2-amidinopropandihydrochlorid) und 4 g Wasser. Nach Erwärmen der Lösung im Reaktor unter Rühren auf 75 °C wurden beide Zulauflösungen innerhalb von 90 Minuten parallel zugegeben. Nach beendetem Zulauf wurde die Mischung 60 Minuten bei 80 °C gerührt, danach wurde auf etwa 45 °C abgekühlt und mit 16,7 g einer 50 Gew.-%igen Ameisensäure neutralisiert.
Brookfield-Viskosität der erhaltenen klaren, 50 Gew.-%igen wäßrigen Lösung (gemessen mit Spindel 5 bei 20 Umdrehungen pro Minute, Temperatur = 25 °C): 18 000 mPas

### Herstellung von Polymer II

In einen Reaktor, der mit einer Stickstoffüberleitung, einem senkrecht, mit Dampf beheizbaren Liebigkühler und einem absteigenden Kühler versehen war, wurden 108 g getrocknete Polyacrylsäure (Good-rite K 722, Firma Goodrich), 204,4 g Dimethylaminopropylamin und 300 g N-Methylpyrrolidon gegeben. Anschließend wurde auf 170 °C erhitzt, wobei die Destillation des gebildeten Reaktionswassers begann. Die Temperatur wurde sukzessive bis auf 230 °C erhöht und bei dieser Temperatur so lange gehalten, bis die Wasserabspaltung beendet war. Danach wurde auf 100 °C abgekühlt und N-Methylpyrrolidon im Vakuum destillativ entfernt. Das erhaltene Polymer wurde in so viel Wasser gelöst, daß der Polymergehalt 1 Gew.-% betrug.

### Herstellung von Copolymer I

Die Herstellung des Copolymer I erfolgte analog der Herstellung von Polymer I, wobei 53,5 g statt 36,8 g Wasser in den Reaktor gegeben wurden und in das Zulaufgefäß 1 eine Mischung aus 39 g Dimethylaminoethylmethacrylat, 7,5 g Ethylacrylat und 3,5 g Methacrylsäure gegeben wurde.
Auf den Neutralisationsschritt wurde verzichtet. Brookfield-Viskosität der erhaltenen opaken 50 Gew.-%igen wäßrigen Lösung (gemessen mit Spindel 5 bei 20 Umdrehungen pro Minute, Temperatur = 25 °C): 33000 mPas

### Herstellung von Copolymer II

32,0 g Acrylsäure
106,7 g 30 Gew.-%ige Schwefelsäure und
976,0 g Wasser
sowie 217,6 g Dimethylaminoethylmethacrylat
46,2 g Methylmethacrylat
1,1 g Azobis(isobuttersäurenitril) und
263,0 g Isopropanol
wurden getrennt vorgemischt, dann in ein Reaktionsgefäß mit Rührer, Heizung und Rückflußkühlung gegeben, auf 65 °C erhitzt und anschließend 30 Minuten bei dieser Temperatur, eine Stunde bei 70 °C und eine Stunde bei 80 °C gerührt.

Kenndaten der erhaltenen klaren 20 Gew.-%igen wäßrig-isopropanolischen Lösung:
spezifische Viskosität einer 1 Gew.-%igen Polymerlösung in 1 n NaNO₃-Lösung: 1,28

### Anwendungsbeispiele

Die Flotationen wurden in einer Denver-Laborflotationszelle von etwa 9 l Inhalt an wäßrigen Füllstoffsuspensionen sowie an wäßrigen Papierstoffsuspensionen durchgeführt.

### Beispiel 1: Füllstoffsuspensionen

23 g Füllstoffe wurden in 9 l Wasser dispergiert und mit Natronlauge auf einen pH-Wert von 8,5 bis 9,0 eingestellt. Nach Zugabe von 0,2 g eines erfindungsgemäß einzusetzenden Polymeren oder Copolymeren wurde sieben Minuten in einer Denver-Laborflotationszelle flotiert. Der in dem Überlauf der Flotationszelle enthaltene Feststoffanteil wurde abfiltriert, bei 105 °C bis zur Gewichtskonstanz getrocknet und gewogen. Die Ergebnisse sind in Tabelle 1 zusammengefaßt.

**Tabelle 1**

| eingesetzte Polymere oder Copolymere | eingesetzte Füllstoffe | Füllstoff aus dem Überlauf in Gew.-% |
|---|---|---|
| Polymer I | Kaolin | 54 |
| | CaCO₃ | 92 |
| | Kaolin/CaCO₃^{xx)} | 73 |
| Polymer II | CaCO₃ | 82 |
| Copolymer I | Kaolin | 60 |
| | CaCO₃ | 82 |
| | Kaolin/CaCO₃^{xx}⁾ | 69 |
| Copolymer II | Kaolin | 77 |
| | CaCO₃ | 86 |
| | Kaolin/CaCO₃^{xx)} | 81 |

| | | |
|---|---|---|
| ^{xx)} Gemisch aus 70 Gew.-% Kaolin und 30 Gew.-% CaCO₃ | | |

### Beispiel 2: Papierstoffsuspensionen

Lufttrockener Papierstoff aus Zeitungen und Illustrierten (Gewichtsverhältnis 1 : 1) wurde mit den üblicherweise eingesetzten Chemikalien einer Druckfarbenflotation unterzogen. Nach der Druckfarbenflotation hatte die Papierstoffsuspension eine Stoffdichte von 1 Gew.-%, eine Temperatur von 40 °C, einen pH-Wert von 9,0 und einen Aschegehalt von 16 Gew.-%. Zu 9 l der deinkten Papierstoffsuspension mit einer Stoffdichte von 1 Gew.-% wurden 0,2 g eines erfindungsgemäß einzusetzenden Polymeren oder Copolymeren zugesetzt und 10 Minuten in einer Denver-Laborflotationszelle flotiert. Nach der Flotation wurde der Papierstoff über Papierfilter entwässert, bis zur Gewichtskonstanz bei 105 °C getrocknet und nach DIN 54 371 der Aschegehalt bestimmt. Die Ergebnisse sind in Tabelle 2 zusammengefaßt.

**Tabelle 2**

| eingesetzte Polymere oder Copolymere | Füllstoffgehalt nach der Flotation im Papier in Gew.-% |
|---|---|
| Polymer I | 5,9 |
| Copolymer I | 6,2 |
| Copolymer II | 5,8 |

## Patentansprüche

1. Verfahren zur Entfernung von Füllstoffen aus Altpapieren, dadurch gekennzeichnet, daß man nach der Druckfarbenflotation den wäßrigen Papierstoffsuspensionen mindestens teilweise wasserlösliche Polymere und/oder Copolymere mit Zahlenmitteln der Molekulargewichte zwischen 1 000 und 500 000, hergestellt durch Polymerisation oder Copolymerisation von aminogruppenhaltigen Monomeren oder hergestellt durch Umsetzung von carboxyl-, ester- und/oder anhydridgruppenhaltigen Polymeren mit Aminoalkoholen und/oder Diaminen, in einer Gesamtmenge von 0,1 bis 8 g/kg lufttrockenem Papierstoff, zusetzt und anschließend in an sich bekannter Weise flotiert.

2. Verfahren nach Anspruch 1, dadurch gekennzeichnet, daß man den Papierstoffsuspensionen Polymere und/oder Copolymere in einer Gesamtmenge von 1 bis 4 g/kg lufttrockenem Papierstoff zusetzt.

3. Verfahren nach einem oder beiden der Ansprüche 1 bis 2, dadurch gekennzeichnet, daß den Papierstoffsuspensionen mindestens teilweise wasserlösliche Polymere und/oder Copolymere mit Zahlenmitteln der Molekulargewichte zwischen 1 000 und 200 000, vorzugsweise zwischen 1 000 und 100 000 zugesetzt werden.

4. Verfahren nach einem oder mehreren der Ansprüche 1 bis 3, dadurch gekennzeichnet, daß den Papierstoffsuspensionen Polymere und/oder Copolymere, hergestellt durch Polymerisation von
A. aminogruppenhaltigen Monomeren der allgemeinen Formel I 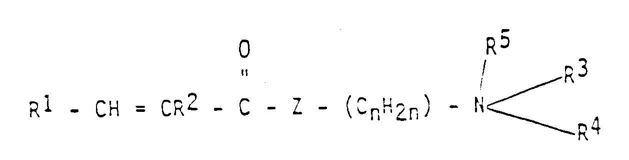 in der R¹ und R² jeweils ein Wasserstoffatom oder eine Methylgruppe, R³ und R⁴ jeweils ein Wasserstoffatom oder eine C₁₋₄-Alkylgruppe oder einen Piperazin-, Piperidin- oder Morpholin-Rest bedeuten, R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säureanion ist, darstellt oder R⁵ ein Elektronenpaar ist, Z O oder NH bedeutet und n eine Zahl zwischen 2 und 5 ist,
oder durch Copolymerisation von A. mit
B1. monomeren, ungesättigten Säuren der allgemeinen Formel II 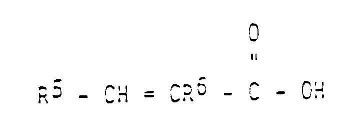 in der R⁵ und R⁶ jeweils ein Wasserstoffatom oder eine Methylgruppe bedeuten, und/oder
B2. monomeren, ungesättigten Carbonsäureestern der allgemeinen Formel III 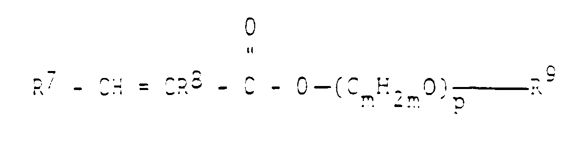 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen bedeuten, m Zahlen zwischen 2 und 4 darstellt und p eine Zahl zwischen 0 und 18 ist, mit der Maßgabe, daß im Falle p = 0 der Gehalt ungesättigter Carbonsäureester im Copolymer 30 Gew.-% nicht übersteigt und/oder
B3. Acrylamiden und/oder Methacrylamiden, die an den Amidstickstoffatomen durch gerad- und/oder verzweigtkettige Alkylreste mit 1 bis 22 C-Atomen substituiert sein können und/oder
B4. N-Vinylpyrrolidon,
zugesetzt werden.

5. Verfahren nach einem oder mehreren der Ansprüche 1 bis 4, dadurch gekennzeichnet, daß in der allgemeinen Formel I die Reste R¹ Wasserstoff, R² Wasserstoff oder Methyl, R³ und R⁴ jeweils Methyl oder Ethyl, R⁵ ein Elektronenpaar oder R⁵ eine C₁₋₄-Alkylgruppe mit der Maßgabe, daß das Gegenion zur Ammoniumfunktion ein Halogenanion ist, bedeuten und in der allgemeinen Formel III der Rest R⁹ eine gerad- oder verzweigtkettige Alkylgruppe mit 1 bis 8 C-Atomen bedeutet.

6. Verfahren nach einem oder mehreren der Ansprüche 1 bis 5, dadurch gekennzeichnet, daß den Papierstoffsuspensionen Polymere und/oder Copolymere, hergestellt durch Umsetzung von Polymeren, die Carboxylgruppen und/oder Estergruppen der allgemeinen Formel -COOR, in der R eine C₁₋₈-Alkylgruppe oder eine aromatische Gruppe bedeutet, und/oder -CO-O-CO-Gruppen enthalten, mit, bezogen auf die in den Polymeren enthaltenen Carboxyl-, Ester- und/oder latenten Carboxylgruppen,
D1. 0 bis 1 Äquivalent Aminoalkoholen der allgemeinen Formel IV 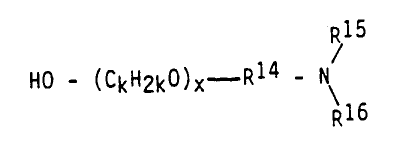 in der R¹⁴ eine C₁₋₈-Alkylgruppe oder eine aromatische Gruppe, R¹⁵ und R¹⁶ gleich oder verschieden sind und C₁₋₄-Alkylgruppen oder aromatische Gruppen oder R¹⁵ und R¹⁶ zusammen CH₂CH₂-O-CH₂CH₂, k 2, 3 und/oder 4 und x eine Zahl zwischen 0 und 10 bedeuten,
D2. 0 bis 1 Äquivalent Diaminen der allgemeinen Formel V 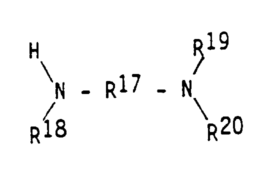 in der R¹⁷ eine C₁₋₈-Alkylgruppe oder eine aromatische Gruppe, R¹⁸ H oder eine C₁₋₄-Alkylgruppe und R¹⁹ und R²⁰ gleich oder verschieden sind und C₁₋₄-Alkylgruppen oder R¹⁹ und R²⁰ zusammen -CH=CH-N=CH- bedeuten,
D3. 0 bis 0,5 Äquivalenten Alkoholen der allgemeinen Formel VI
HO - (CᵢH₂ᵢO)_{y}―R²¹
in der R²¹ eine C₆₋₂₂-Alkylgruppe oder eine aromatische Gruppe, i 2, 3 und/oder 4 und y eine Zahl zwischen 0 und 30 bedeuten und
D4. 0 bis 0,5 Äquivalenten Aminen der allgemeinen Formel VII 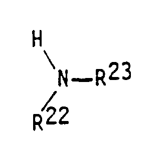 in der R²² H oder eine C₁₋₄-Alkylgruppe und R²³ eine C₆₋₂₂-Alkylgruppe oder eine aromatische Gruppe bedeuten,
mit der Maßgabe, daß die Summe der Äquivalente der Komponenten D1 und D2 ungleich 0 ist,
zugesetzt werden.

7. Verfahren nach einem oder mehreren der Ansprüche 1 bis 6, dadurch gekennzeichnet, daß den Papierstoffsuspensionen Polymere, hergestellt durch Umsetzung von carboxyl-, ester- und/oder anhydridgruppenhaltigen Polymeren mit, bezogen auf die in den Polymeren enthaltenen Carboxyl-, Ester- und/oder latenten Carboxylgruppen,
D1. 0 bis 1 Äquivalent Aminoalkoholen,
D2. 0 bis 1 Äquivalent Diaminen,
D3. 0 bis 0,2 Äquivalenten Alkoholen und
D4. 0 bis 0,2 Äquivalenten Aminen,
mit der Maßgabe, daß die Summe der Äquivalente der Komponenten D1 und D2 zwischen 0,7 und 1 liegt,
zugesetzt werden.

8. Verfahren nach einem oder mehreren der Ansprüche 1 bis 7, dadurch gekennzeichnet, daß carboxyl-, ester- und/oder anhydridgruppenhaltige Polymere Struktureinheiten der allgemeinen Formeln 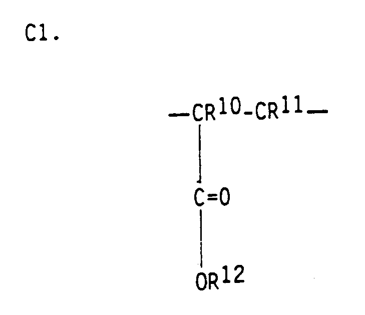 und/oder 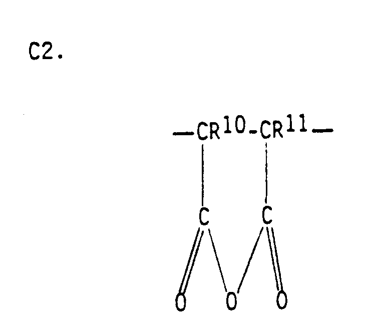 und/oder 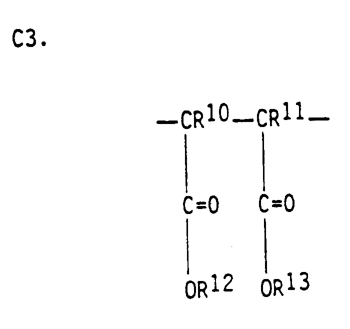 in denen R¹⁰ und R¹¹ gleich oder verschieden sind und jeweils H oder eine Methylgruppe und R¹² und R¹³ gleich oder verschieden sind und jeweils H, eine C₁₋₈-Alkylgruppe oder eine aromatische Gruppe bedeuten, enthalten.

9. Verfahren nach einem oder mehreren der Ansprüche 1 bis 8, dadurch gekennzeichnet, daß carboxyl-, ester- und/oder anhydridgruppenhaltige Polymere Struktureinheiten der allgemeinen Formel C1 enthalten.

10. Verfahren nach einem oder mehreren der Ansprüche 1 bis 9, dadurch gekennzeichnet, daß mindestens teilweise wasserlösliche Polymere und/oder Copolymere in Kombination mit mindestens teilweise wasserlöslichen amino- und/oder ammoniumgruppenhaltigen Polymeren mit Zahlenmitteln der Molekulargewichte zwischen 2 000 und 500 000, wobei das Gewichtsverhältnis von Polymeren und/oder Copolymeren zu amino-und/oder ammoniumgruppenhaltigen Polymeren zwischen 10 : 1 und 1 : 10, vorzugsweise zwischen 5 : 1 und 1: 5 liegt, den Papierstoffsuspensionen zugesetzt werden.

11. Verwendung von mindestens teilweise wasserlöslichen Polymeren und/oder Copolymeren mit Zahlenmitteln der Molekulargewichte zwischen 1 000 und 500 000, hergestellt durch Polymerisation oder Copolymerisation von aminogruppenhaltigen Monomeren oder durch Umsetzung von carboxyl-, ester- und/oder anhydridgruppenhaltigen Polymeren mit Aminoalkoholen und/oder Diaminen, zur Entfernung von Füllstoffen aus Altpapieren durch Flotation.

12. Verwendung nach Anspruch 11, dadurch gekennzeichnet, daß Polymere und/oder Copolymere in den wäßrigen Papierstoffsuspensionen in einer Gesamtmenge von 0,1 bis 8 g/kg lufttrockenem Papierstoff, vorzugsweise von 1 bis 4 g/kg lufttrockenem Papierstoff verwendet werden.

13. Verwendung nach einem oder beiden der Ansprüche 11 bis 12, dadurch gekennzeichnet, daß mindestens teilweise wasserlösliche Polymere und/oder Copolymere mit Zahlenmitteln der Molekulargewichte zwischen 1 000 und 200 000, vorzugsweise zwischen 1 000 und 100 000, verwendet werden.

14. Verwendung nach einem oder mehreren der Ansprüche 11 bis 13, dadurch gekennzeichnet, daß Polymere und/oder Copolymere, hergestellt durch Polymerisation von
A. aminogruppenhaltigen Monomeren der allgemeinen Formel I 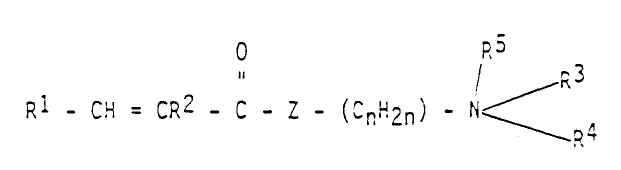 in der R¹ und R² jeweils ein Wasserstoffatom oder eine Methylgruppe, R³ und R⁴ jeweils ein Wasserstoffatom oder eine C₁₋₄-Alkylgruppe oder einen Piperazin-, Piperidin- oder Morpholin-Rest bedeuten, R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säureanion ist, darstellt oder R⁵ ein Elektronenpaar ist, Z O oder NH bedeutet und n eine Zahl zwischen 2 und 5 ist,
oder durch Copolymerisation von A. mit
B1. monomeren, ungesättigten Säuren der allgemeinen Formel II 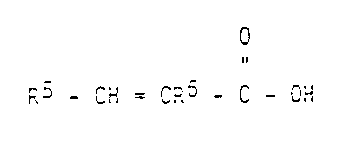 in der R⁵ und R⁶ jeweils ein Wasserstoffatom oder eine Methylgruppe bedeuten, und/oder
B2. monomeren, ungesättigten Carbonsäureestern der allgemeinen Formel III 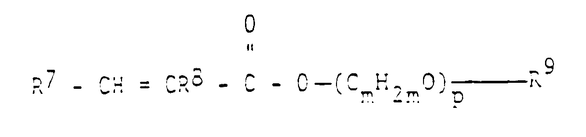 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen bedeuten, m Zahlen zwischen 2 und 4 darstellt und p eine Zahl zwischen 0 und 18 ist, mit der Maßgabe, daß im Falle p = 0 der Gehalt ungesättigter Carbonsäureester im Copolymer 30 Gew.-% nicht übersteigt und/oder
B3. Acrylamiden und/oder Methacrylamiden, die an den Amidstickstoffatomen durch gerad- und/oder verzweigtkettige Alkylreste mit 1 bis 22 C-Atomen substituiert sein können und/oder
B4. N-Vinylpyrrolidon,
verwendet werden.

15. Verwendung nach einem oder mehreren der Ansprüche 11 bis 14, dadurch gekennzeichnet, daß Polymere, hergestellt durch Umsetzung von Polymeren, die Carboxylgruppen und/oder Estergruppen der allgemeinen Formel -COOR, in der R eine C₁₋₈-Alkylgruppe oder eine aromatische Gruppe bedeutet, und/oder -CO-O-CO-Gruppen enthalten,
mit, bezogen auf die in den Polymeren enthaltenen Carboxyl-, Ester- und/oder latenten Carboxylgruppen,
D1. 0 bis 1 Äquivalent Aminoalkoholen der allgemeinen Formel IV 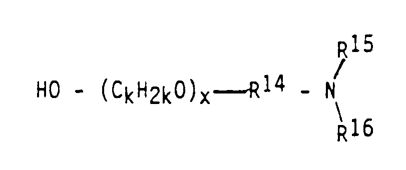 in der R¹⁴ eine C₁₋₈-Alkylgruppe oder eine aromatische Gruppe, R¹⁵ und R¹⁶ gleich oder verschieden sind und C₁₋₄-Alkylgruppen oder aromatische Gruppen oder R¹⁵ und R¹⁶ zusammen CH₂CH₂-O-CH₂CH₂, k 2, 3 und/oder 4 und x eine Zahl zwischen 0 und 10 bedeuten,
D2. 0 bis 1 Äquivalent Diaminen der allgemeinen Formel V 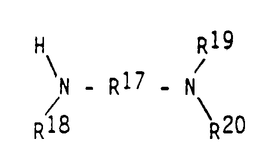 in der R¹⁷ eine C₁₋₈-Alkylgruppe oder eine aromatische Gruppe, R¹⁸ H oder eine C₁₋₄-Alkylgruppe und R¹⁹ und R²⁰ gleich oder verschieden sind und C₁₋₄-Alkylgruppen oder R¹⁹ und R²⁰ zusammen -CH=CH-N=CH- bedeuten,
D3. 0 bis 0,5 Äquivalenten Alkoholen der allgemeinen Formel VI
HO - (CᵢH₂ᵢO)_{y}―R²¹
in der R²¹ eine C₆₋₂₂-Alkylgruppe oder eine aromatische Gruppe, i 2, 3 und/oder 4 und y eine Zahl zwischen 0 und 30 bedeuten und
D4. 0 bis 0,5 Äquivalenten Aminen der allgemeinen Formel VII 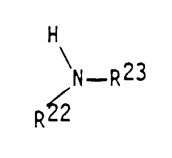 in der R²² H oder eine C₁₋₄-Alkylgruppe und R²³ eine C₆₋₂₂-Alkylgruppe oder eine aromatische Gruppe bedeuten,
mit der Maßgabe, daß die Summe der Äquivalente der Komponenten D1 und D2 ungleich 0 ist
verwendet werden.

16. Verwendung nach einem oder mehreren der Ansprüche 11 bis 15, dadurch gekennzeichnet, daß mindestens teilweise wasserlösliche Polymere und/oder Copolymere in Kombination mit mindestens teilweise wasserlöslichen amino- und/oder ammoniumgruppenhaltigen Polymeren, wobei das Gewichtsverhältnis Polymere und/oder Copolymere zu amino- und/oder ammoniumgruppenhaltigen Polymeren zwischen 10 : 1 und 1 : 10, vorzugsweise zwischen 5 : 1 und 1 : 5 liegt, verwendet werden.

## Claims

1. A process for the removal of fillers from wastepaper, characterized in that, after flotation of the printing ink, at least partly water-soluble polymers and/or copolymers having number average molecular weights in the range from 1,000 to 500,000, prepared by polymerization or copolymerization of monomers containing amino groups or by reaction of polymers containing carboxyl, ester and/or anhydride groups with amino alcohols and/or diamines are added to the aqueous paper stock suspensions in a total quantity of from 0.1 to 8 g/kg air-dry paper stock, followed by flotation in known manner.

2. A process as claimed in claim 1, characterized in that polymers and/or copolymers are added to the paper stock suspensions in a total quantity of 1 to 4 g/kg air-dry paper stock.

3. A process as claimed in one or both of claims 1 to 2, characterized in that at least partly water-soluble polymers and/or copolymers having number average molecular weights in the range from 1,000 to 200,000 and preferably in the range from 1,000 to 100,000 are added to the paper stock suspensions.

4. A process as claimed in one or more of claims 1 to 3, characterized in that polymers and/or copolymers prepared by polymerization of
A. monomers containing amino groups corresponding to general formula I 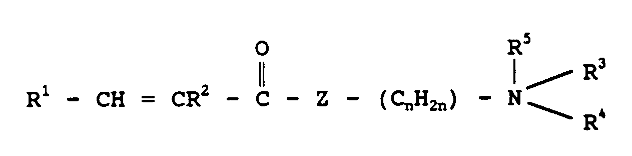 in which R¹ and R² represent hydrogen or methyl, R³ and R⁴ represent hydrogen or a C₁₋₄ alkyl radical or a piperazine, piperidine or morpholine group, R⁵ is a linear or branched C₁₋₂₂ alkyl radical, with the proviso that the counterion to the ammonium function is a halogen, sulfate, phosphate, borate or organic acid anion, or R⁵ is an electron pair, Z represents O or NH and n is a number of 2 to 5,
or by copolymerization of A. with
B1. monomeric, unsaturated acids corresponding to general formula II 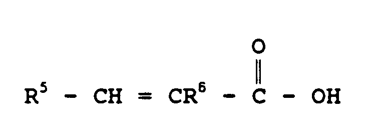 in which R⁵ and R⁶ each represent a hydrogen atom or a methyl group, and/or
B2. monomeric, unsaturated carboxylic acid esters corresponding to general formula III 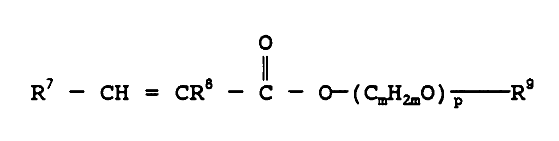 in which R⁷ and R⁸ each represent a hydrogen atom or a methyl group and R⁹ is a linear or branched C₁₋₂₂ alkyl group, m is a number of 2 to 4 and p is a number of 0 to 18, with the proviso that, where p = 0, the content of unsaturated carboxylic acid esters in the copolymer does not exceed 30% by weight, and/or
B3. acrylamides and/or methacrylamides which may be substituted at the amide nitrogen atoms by linear and/or branched C₁₋₂₂ alkyl radicals, and/or
B4. N-vinyl pyrrolidone
are added to the paper stock suspensions.

5. A process as claimed in one or more of claims 1 to 4, characterized in that, in general formula I, R¹ is hydrogen, R² is hydrogen or methyl, R³ and R⁴ are methyl or ethyl, R⁵ represents an electron pair or R⁵ is a C₁₋₄ alkyl group, with the proviso that the counterion to the ammonium function is a halogen ion, and, in general formula III, R⁹ is a linear or branched C₁₋₈ alkyl group.

6. A process as claimed in one or more of claims 1 to 5, characterized in that polymers and/or copolymers prepared by reaction of polymers containing carboxyl groups and/or ester groups corresponding to the general formula -COOR, in which R is a C₁₋₈ alkyl group or an aromatic group, and/or -CO-O-CO- groups
with - based on the carboxyl, ester and/or latent carboxyl groups present in the polymers -
D1. 0 to 1 equivalent amino alcohols corresponding to general formula IV 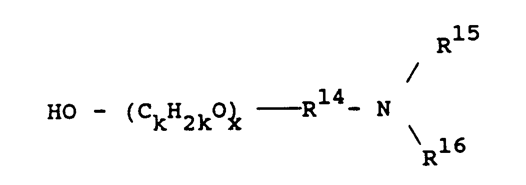 in which R¹⁴ is a C₁₋₈ alkyl group or an aromatic group, R¹⁵ and R¹⁶ are the same or different and represent C₁₋₄ alkyl groups or aromatic groups or R¹⁵ and R¹⁶ together represent CH₂CH₂-O-CH₂CH₂, k = 2, 3 and/or 4 and x is a number of 0 to 10,
D2. 0 to 1 equivalent diamines corresponding to general formula V 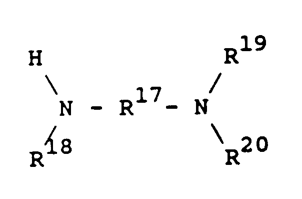 in which R¹⁷ is a C₁₋₈ alkyl group or an aromatic group, R¹⁸ is H or a C₁₋₄ alkyl group and R¹⁹ and R²⁰ may be the same or different and represent C₁₋₄ alkyl groups or R¹⁹ and R²⁰ together represent -CH=CH-N=CH-,
D3. 0 to 0.5 equivalent alcohols corresponding to general formula VI
HO - (CᵢH₂ᵢO)_{y}―R²¹
in which R²¹ is a C₆₋₂₂ alkyl group or an aromatic group, i = 2, 3 and/or 4 and y is a number of 0 to 30, and
D4. 0 to 0.5 equivalent amines corresponding to general formula VII 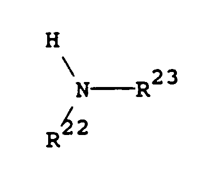 in which R²² is H or a C₁₋₄ alkyl group and R²³ is a C₆₋₂₂ alkyl group or an aromatic group,
with the proviso that the sum of the equivalents of components B1 and B2 is not 0,
are added to the paper stock suspensions.

7. A process as claimed in one or more of claims 1 to 6, characterized in that polymers prepared by reaction of polymers containing carboxyl, ester and/or anhydride groups with - based on the carboxyl, ester and/or latent carboxyl groups present in the polymers -
D1. 0 to 1 equivalent amino alcohols,
D2. 0 to 1 equivalent diamines,
D3. 0 to 0.2 equivalent alcohols and
D4. 0 to 0.2 equivalent amines,
with the proviso that the sum of the equivalents of components D1 and D2 is from 0.7 to 1,
are added to the paper stock suspensions.

8. A process as claimed in one or moe of claims 1 to 7, characterized in that polymers containing carboxyl, ester and/or anhydride groups contain structural units corresponding to the general formulae 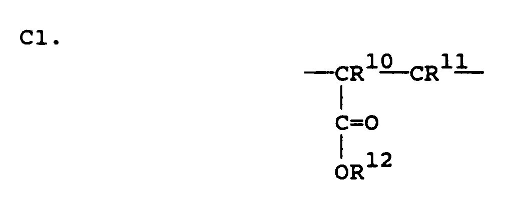 and/or 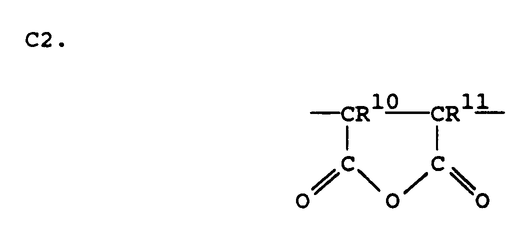 and/or 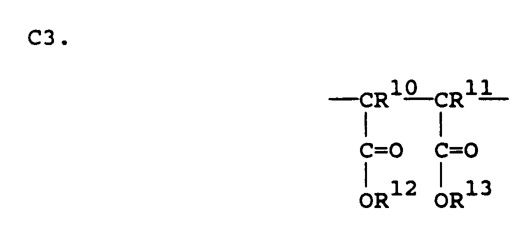 in which R¹⁰ and R¹¹ may be the same or different and represent H or a methyl group and R¹² and R¹³ may be the same or different and represent H, a C₁₋₈ alkyl group or an aromatic group.

9. A process as claimed in one or more of claims 1 to 8, characterized in that polymers containing carboxyl, ester and/or anhydride groups contain structural units corresponding to general formula C1.

10. A process as claimed in one or more of claims 1 to 9, characterized in that at least partly water-soluble polymers and/or copolymers are added to the paper stock suspensions in combination with at least partly water-soluble polymers bearing amino and/or ammonium groups and having number average molecular weights of 2,000 to 500,000, the ratio by weight of polymers and/or copolymers to polymers bearing amino and/or ammonium groups being from 10:1 to 1:10 and preferably from 5:1 to 1:5.

11. The use of at least partly water-soluble polymers and/or copolymers having number average molecular weights in the range from 1,000 to 500,000, prepared by polymerization or copolymerization of monomers containing amino groups or by reaction of polymers containing carboxyl, ester and/or anhydride groups with amino alcohols and/or diamines, for the removal of fillers from wastepaper by flotation.

12. The use claimed in claim 11, characterized in that polymers and/or copolymers are used in the aqueous paper stock suspensions in a total quantity of 0.1 to 8 g/kg air-dry paper stock and preferably in a total quantity of 1 to 4 g/kg air-dry paper stock.

13. The use claimed in one or both of claims 11 to 12, characterized in that at least partly water-soluble polymers and/or copolymers having number average molecular weights in the range from 1,000 to 200,000 and preferably in the range from 1,000 to 100,000 are used.

14. The use claimed in one or more of claims 11 to 13, characterized in that polymers and/or copolymers prepared by polymerization of
A. monomers containing amino groups corresponding to general formula I 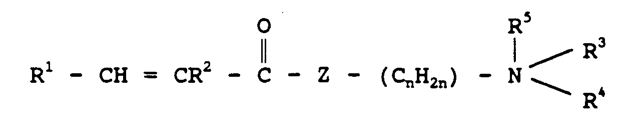 in which R¹ and R² represent hydrogen or methyl, R³ and R⁴ represent hydrogen or a C₁₋₄ alkyl radical or a piperazine, piperidine or morpholine group, R⁵ is a linear or branched C₁₋₂₂ alkyl radical, with the proviso that the counterion to the ammonium function is a halogen, sulfate, phosphate, borate or organic acid anion, or R⁵ is an electron pair, Z represents O or NH and n is a number of 2 to 5,
or by copolymerization of A. with
B1. monomeric, unsaturated acids corresponding to general formula II 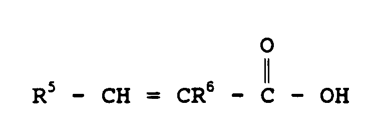 in which R⁵ and R⁶ each represent a hydrogen atom or a methyl group, and/or
B2. monomeric, unsaturated carboxylic acid esters corresponding to general formula III 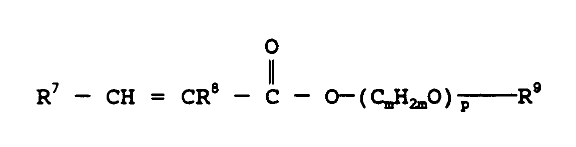 in which R⁷ and R⁸ each represent a hydrogen atom or a methyl group and R⁹ is a linear or branched C₁₋₂₂ alkyl group, m is a number of 2 to 4 and p is a number of 0 to 18, with the proviso that, where p = 0, the content of unsaturated carboxylic acid esters in the copolymer does not exceed 30% by weight, and/or
B3. acrylamides and/or methacrylamides which may be substituted at the amide nitrogen atoms by linear and/or branched C₁₋₂₂ alkyl radicals, and/or
B4. N-vinyl pyrrolidone
are used.

15. The use claimed in one or more of claims 11 to 14, characterized in that polymers and/or copolymers prepared by reaction of polymers containing carboxyl groups and/or ester groups corresponding to the general formula -COOR, in which R is a C₁₋₈ alkyl group or an aromatic group, and/or -CO-O-CO- groups
with - based on the carboxyl, ester and/or latent carboxyl groups present in the polymers -
D1. 0 to 1 equivalent amino alcohols corresponding to general formula IV 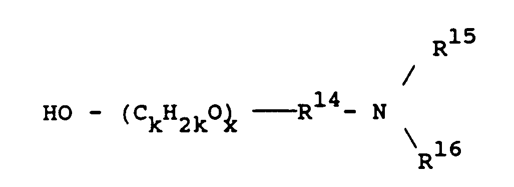 in which R¹⁴ is a C₁₋₈ alkyl group or an aromatic group, R¹⁵ and R¹⁶ are the same or different and represent C₁₋₄ alkyl groups or aromatic groups or R¹⁵ and R¹⁶ together represent CH₂CH₂-O-CH₂CH₂, k = 2, 3 and/or 4 and x is a number of 0 to 10,
D2. 0 to 1 equivalent diamines corresponding to general formula V 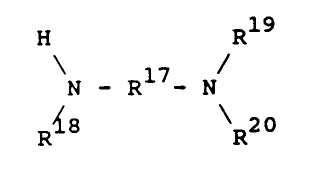 in which R¹⁷ is a C₁₋₈ alkyl group or an aromatic group, R¹⁸ is H or a C₁₋₄ alkyl group and R¹⁹ and R²⁰ may be the same or different and represent C₁₋₄ alkyl groups or R¹⁹ and R²⁰ together represent -CH=CH-N=CH-,
D3. 0 to 0.5 equivalent alcohols corresponding to general formula VI
HO - (CᵢH₂ᵢO)_{y}―R²¹
in which R²¹ is a C₆₋₂₂ alkyl group or an aromatic group, i = 2, 3 and/or 4 and y is a number of 0 to 30, and
D4. 0 to 0.5 equivalent amines corresponding to general formula VII 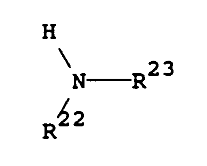 in which R²² is H or a C₁₋₄ alkyl group and R²³ is a C₆₋₂₂ alkyl group or an aromatic group,
with the proviso that the sum of the equivalents of components B1 and B2 is not 0,
are used.

16. The use claimed in one or more of claims 11 to 15, characterized in that at least partly water-soluble polymers and/or copolymers are used in combination with at least partly water-soluble polymers bearing amino and/or ammonium groups, the ratio by weight of polymers and/or copolymers to polymers bearing amino and/or ammonium groups being from 10:1 to 1:10 and preferably from 5:1 to 1:5.

## Revendications

1. Procédé d'enlèvement de matières de charge provenant de vieux papiers, caractérisé en ce qu'on ajoute après la flottation des couleurs d'impression, aux suspensions aqueuses de pâte à papier des polymères et/ou des copolymères au moins partiellement solubles dans l'eau avec des moyennes numériques des poids moléculaires comprises entre 1 000 et 500 000, produits par polymérisation ou copolymérisation de monomères contenant des groupes amino ou produits par transformation de polymères contenant des groupes carboxyle, ester et/ou anhydride avec des aminoalcools et/ou des diamines, en une quantité totale de 0,1 à 8 g/kg de pâte à papier séchée à l'air et ensuite on exécute la flottation d'une manière connue en soi.

2. Procédé selon la revendication 1, caractérisé en ce qu'on ajoute aux suspensions de pâte à papier des polymères et/ou des copolymères en une quantité totale de 1 à 4 g/kg de pâte à papier séchée à l'air.

3. Procédé selon une ou les deux revendications 1 à 2, caractérisé en ce qu'on ajoute aux suspensions de pâte à papier des polymères et/ou copolymères au moins partiellement solubles dans l'eau avec des moyennes numérique des poids moléculaires comprises entre 1 000 et 200 000, de préférence entre 1 000 et 100 000.

4. Procédé selon une ou plusieurs des revendications 1 à 3, caractérisé en ce qu'on ajoute aux suspension de pâte à papier des polymères et/ou des copolymères produits par polymérisation.
A. de monomères contenant des groupes aminés de formule générale I : 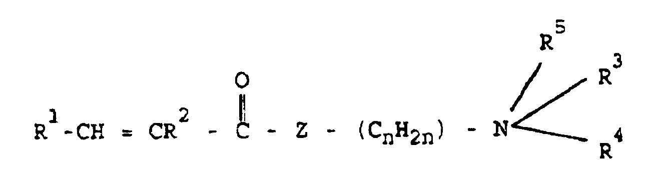 dans laquelle R¹ et R² représentent respectivement de l'hydrogène ou du méthyle, R³ et R⁴ chacun de l'hydrogène ou un radical alkyle en C₁₋₄ ou un radical piperozine, pipéridine ou morpholine, R⁵ un radical alkyle à chaîne droite ou ramifiée avec 1 à 22 atomes de C, sous réserve que le contreion par rapport à la fonction ammonium soit un anion halogène, un anion sulfate, un anion phosphate, un anion borate ou un anion d'acide organique ou bien R⁵ représente une paire d'électrons, Z représente O ou NH et n est un nombre entre 2 et 5.
Ou par copolymères de A. avec
B1. des monomères d'acides insaturés de formule générale II 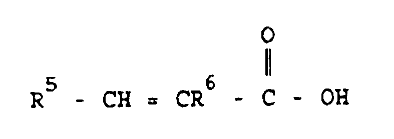 dans laquelle R⁵ et R⁶ représentent chacun un atome d'hydrogène ou un groupe méthyle, et/ou
B2. des monomères d'acides carboxyliques non saturés de formule générale III 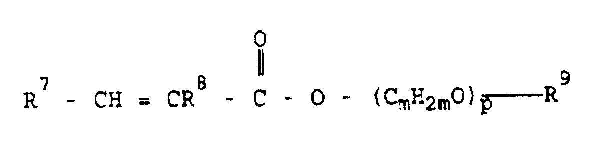 dans laquelle les radicaux R⁷ et R⁶ représentent chacun un atome d'hydrogène ou un groupe méthyle et R⁹ un groupe alkyle à chaîne droite ou ramifiée avec de 1 à 22 atomes de C et m des nombres entre 2 et 4 et p un nombre entre 0 et 18, sous réserve que dans le cas p = O la teneur d'ester d'acide carboxylique non saturé dans le copolymère ne dépasse pas 30 % en poids.
B3. des acrylamides et/ou des méthacrylamides qui peuvent être substitués sur les atomes d'azote amidé par des radicaux alkyle à chaîne droite et/ou ramifiée avec de 1 à 22 atomes de C, et/ou
B4. du N-vinylpyrrolidon.

5. Procédé selon une ou plusieurs des revendications 1 à 4, caractérisé en ce que dans la formule générale I les radicaux représentent R¹ de l'hydrogène, R² de l'hydrogène ou du méthyle, R³ et R⁴ respectivement du méthyle ou de l'éthyle, R⁵ une paire d'électrons ou R⁵ un radical alkyle en C₁₋₄, sous réserve que le contre-ion pour la fonction ammonium soit un anion halogène, et dans la formule générale III le radical R⁹ représente un radical alkyle à chaîne droite ou ramifiée avec de 1 à 8 atomes de

6. Procédé selon une ou plusieurs des revendication s1 à 5, caractérisé en c qu'on ajoute aux suspensions de pâte à papier des polymères et/ou des copolymères produits par transformation de polymères, qui contiennent des groupes carboxyle et ou des groupes ester de formule générale -COOR, dans laquelle R représente un groupe alkyle en C₁₋₈ ou un groupe aromatique, et/ou des groupes -CO-O-CO, avec par rapport aux groupes carboxyle, ester et/ou carboxyle latents
D1. de 0 à 1 équivalent d'amino-alcools de formule générale IV. 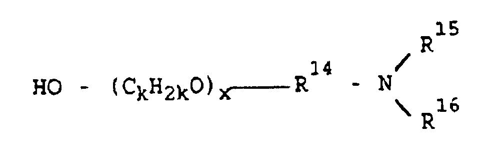 dans laquelle R¹⁴ représente un groupe alkyle C₁₋₈ ou un groupe aromatique, R¹⁵ et R¹⁶ sont égaux ou différents et représentent des groupes alkyle C₁₋₄ ou des groupes aromatiques ou R¹⁵ et R¹⁶ représentent ensemble CH₂CH₂-O-CH₂CH₂, k est 2,3 et/ou 4 et x un nombre entre 0 et 10.
D2 de 0 à 1 équivalent de diamines de formule générale V 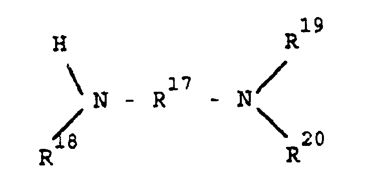 dans laquelle R¹⁷ représente un groupe alkyle en C₁₋₈ ou un groupe aromatique, R¹⁸ est H ou un groupe alkyle en C₁₋₄ et R¹⁹ et R²⁰ sont égaux ou différents et représentent des groupes alkyle en C₁₋₄ ou bien R¹⁹ et R²⁰ ensemble représentent -CH=CH-N=CH-.
D3. de 0 à 0,5 équivalent d'alcools de formule générale VI.
HO ―CᵢH₂ᵢO)_{y}―R²¹
dans laquelle R²¹ représente un groupe alkyle en C₆₋₁₂ ou un groupe aromatique, i est 2,3 et/ou 4 et y un nombre entre 0 et 20 et
D4. de 0 à 0,5 équivalent d'amines de formule générale VII. 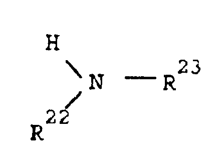 dans laquelle R²² représente H ou un groupe alkyle en C₁₋₄ et R²³ un groupe alkyle en C₆₋₂₂ ou un groupe aromatique,
sous réserve que, la somme des équivalents des composants D1 et D2 soit différente de O.

7. Procédé selon une ou plusieurs des revendications 1 à 6, caractérisé en ce qu'aux suspensions de pâte à papier on ajoute des polymères, produits par transformation de polymères contenant des groupes carboxyle, ester et/ou anhydride avec par rapport aux groupes carboxyle, ester et/ou carboxyle latents contenant dans les polymères,
D1 de 0 à 1 équivalent d'amino-alcools,
D2 de 0 à 1 équivalent de diamines
D3 de 0 à 0,2 équivalents d'alcools et
D4 de 0 à 0,2 équivalents d'amines
sous réserve que la somme des équivalents des composants D1 et D2 se situe entre 0,7 et 1.

8. Procédé selon une ou plusieurs des revendications 1 à 7, caractérisé en ce que des polymères contenant des groupes carboxyle, ester et/ou anhydride contiennent de préférence des unités de structure des formules générales : 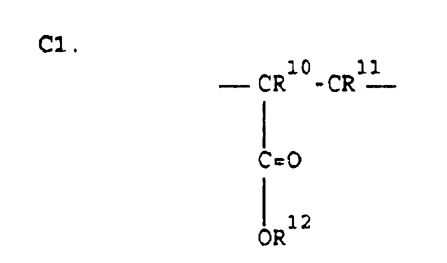 et/ou 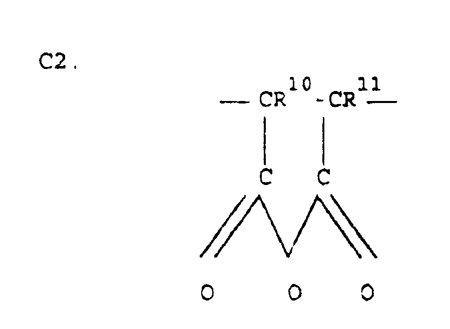 et/ou 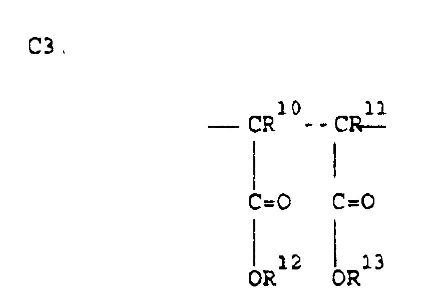 dans lesquelles R¹⁰ et R¹¹ sont égaux ou différents et représentent respectivement H ou un groupe méthyle et R¹² et R¹³ sont égaux ou différents et représentent respectivement H, des groupes alkyle en C₁₋₈ ou des groupes aromatiques.

9. Procédé selon une ou plusieurs des revendications 1 à 8, caractérisé en ce que des polymères contenant des groupes carboxyle, ester et/ou anhydride contiennent des unités de structure de la formule générale C1.

10. Procédé selon une ou plusieurs des revendications 1 à 9, caractérisé en ce qu'on ajoute aux suspension de pâte à papier des polymères et/ou des copolymères au moins partiellement solubles dans l'eau en combinaison avec des polymères contenant des groupes amino et/ou ammonium au moins partiellement solubles dans l'eau avec des moyennes numériques de leurs poids moléculaires comprises entre 2 000 et 500 000, le rapport de poids des polymères et/ou copolymères aux polymères contenant des groupes amino et/ou ammonium étant situé de préférence entre 5:1 et 1:5.

11. Utilisation de polymères et/ou de copolymères au moins partiellement solubles dans l'eau ayant des moyennes numériques des poids moléculaires comprises entre 1 000 et 500 000, produits par polymérisation ou copolymérisation de monomères contenant des groupes amino ou par transformation de polymères contenant des groupes carboxyle, ester et/ou anhydride avec des amino-alcools et/ou des diamines, pour l'enlèvement des charges des vieux papiers par flottation.

12. Utilisation selon la revendication 11, caractérisée en ce qu'on utilise des polymères et/ou copolymères dans les suspensions aqueuses de pâte à papier en une quantité totale de 0,1 à 8 g/kg de pâte à papier séchée à l'air, de préférence de 1 à 4 g/kg de pâte à papier séchée à l'air.

13. Utilisation selon l'une d'elles ou les deux revendications 11 à 12, caractérisée en ce qu'on utilise des polymères et/ou copolymères au moins partiellement solubles dans l'eau avec des moyennes numériques des poids moléculaires comprises entre 1 000 et 200 000, de préférence entre 1 000 et 100 000.

14. Utilisation selon une ou plusieurs des revendications 11 à 13, caractérisée en ce qu'on utilise des polymères et/ou copolymères produits par polymérisation.
A. de monomères contenant des groupes aminés de formule générale I : 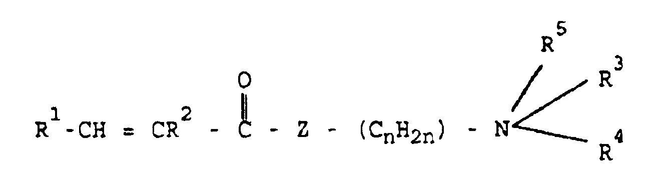 dans laquelle R¹ et R² représentent respectivement de l'hydrogène ou du méthyle, R³ et R⁴ chacun de l'hydrogène ou un radical alkyle en C₁₋₄ ou un radical piperozine, pipéridine ou morpholine, R⁵ un radical alkyle à chaîne droite ou ramifiée avec 1 à 22 atomes de C, sous réserve que le contre-ion par rapport à la fonction ammonium soit un anion halogène, un anion sulfate, un anion phosphate, un anion borate ou un anion d'acide organique ou bien R⁵ représente une paire d'électrons, Z représente O ou NH et n est un nombre entre 2 et 5.
Ou par copolymères de A. avec
B1. des monomères d'acides insaturés de formule générale II 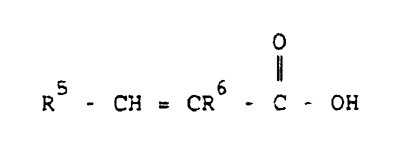 dans laquelle R⁵ et R⁶ représentent chacun un atome d'hydrogène ou un groupe méthyle, et/ou
B2. des monomères d'acides carboxyliques non saturés de formule générale III 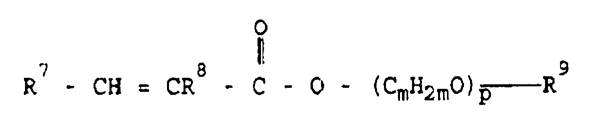 dans laquelle les radicaux R⁷ et R⁸ représentent chacun un atome d'hydrogène ou un groupe méthyle et R⁹ un groupe alkyle à chaîne droite ou ramifiée avec de 1 à 22 atomes de C et m des nombres entre 2 et 4 et p un nombre entre 0 et 18, sous réserve que dans le cas p = O la teneur d'ester d'acide carboxylique non saturé dans le copolymère ne dépasse pas 30 % en poids.
B3. des acrylamides et/ou des méthacrylamides qui peuvent être substitués sur les atomes d'azote amidé par des radicaux alkyle à chaîne droite et/ou ramifiée avec de 1 à 22 atomes de C, et/ou
B4. du N-vinylpyrrolidon

15. Utilisation selon une ou plusieurs des revendications 11 à 14, caractérisée en ce que des polymères produits par transformation de polymères, contiennent les groupes carboxyle et/ou les groupes éther de la formule générale -COOR, dans laquelle R représente un groupe alkyle en C₁₋₈ ou un groupe aromatique, et/ou des groupes -CO-O-CO, avec par rapport aux groupes carboxyle, ester et ou carboxyle latents contenus dans les polymères :
D1. de 0 à 1 équivalent d'amino-alcools de formule générale IV. 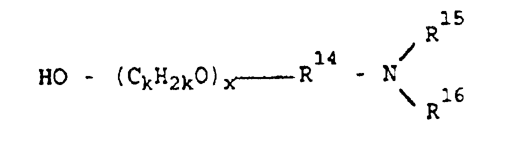 dans laquelle R¹⁴ représente un groupe alkyle C₁₋₈ ou un groupe aromatique, R¹⁵ et R¹⁶ sont égaux ou différents et représentent des groupes alkyle C₁₋₄ ou des groupes aromatiques ou R¹⁵ et R¹⁶ représentent ensemble CH₂CH₂-O-CH₂CH₂, k est 2,3 et/ou 4 et x un nombre entre 0 et 10.
D2 de 0 à 1 équivalent de diamines de formule générale V 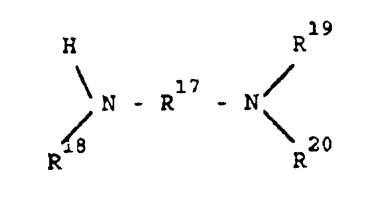 dans laquelle R¹⁷ représente un groupe alkyle en C₁₋₈ ou un groupe aromatique, R¹⁸ est H ou un groupe alkyle en C₁₋₄ et R¹⁹ et R²⁰ sont égaux ou différents et représentent des groupes alkyle en C₁₋₄ ou bien R¹⁹ et R²⁰ ensemble représentent -CH=CH-N=CH-.
D3. de 0 à 0,5 équivalent d'alcools de formule générale VI.
HO - -CᵢH₂ᵢO)_{y}―R²¹
dans laquelle R²¹ représente un groupe alkyle en C₆₋₁₂ ou un groupe aromatique, i est 2,3 et/ou 4 et y un nombre entre 0 et 20.et
D4. de 0 à 0,5 équivalent d'amines de formule générale VII. 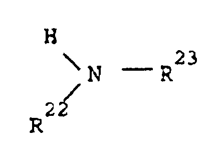 dans laquelle R²² représente H ou un groupe alkyle en C₁₋₄ et R²³ un groupe alkyle en C₆₋₂₂ ou un groupe aromatique,
sous réserve que, la sonne des équivalents des composants D1 et D2 soit différente de O.

16. Utilisation selon une ou plusieurs des revendications 11 à 15, caractérisée en ce qu'on utilise des polymères et/ou des copolymères au moins partiellement solubles dans l'eau en combinaison avec des polymères au moins partiellement solubles dans l'eau, contenant des groupes amino et ou d'ammonium, le rapport de poids des polymères et/ou d'ammonium se situant entre 10:1 et 1:10, de préférence entre 5:1 et 1:5.
